# EUROPÄISCHE PATENTSCHRIFT

(11) **EP 3 815 765 B1**
(45) Veröffentlichungstag und Bekanntmachung des Hinweises auf die Patenterteilung: **25.01.2023**
(21) Anmeldenummer: 19206873.2
(22) Anmeldetag: 04.11.2019
(51) Int. Cl.: B01D 39/16, B01D 39/18

(54) **KLIMAANLAGE FÜR EIN KRAFTFAHRZEUG**
AIR CONDITIONING FOR A MOTOR VEHICLE
CLIMATISATION POUR UN VÉHICULE AUTOMOBILE

(43) Veröffentlichungstag der Anmeldung: 05.05.2021
(73) Patentinhaber: Korpan, Nikolai N., 1090 Wien (AT); Palant, Volodymyr G., 03049 Kyiv (UA)
(72) Erfinder: Korpan, Nikolai N., 1090 Wien (AT); Palant, Volodymyr G., 03049 Kyiv (UA)
(74) Vertreter: Patentanwaltskanzlei Matschnig & Forsthuber OG

(56) Entgegenhaltungen:
- EP-A1- 1 307 242
- EP-A1- 1 953 286
- EP-A2- 2 361 144
- EP-A2- 2 731 697
- US-A- 5 840 245
- US-A1- 2016 332 104

## Beschreibung

Die Erfindung betrifft eine Klimaanlage für ein Kraftfahrzeug mit zumindest einer Filtervorrichtung zur Filterung einer von außen in den Kraftfahrzeuginnenraum eingespeisten Luft, wobei die Filtervorrichtung umfasst:
- zumindest eine erste Filterschicht aus einem Trägermedium zur Aufnahme einer Beschichtung,
- eine Halterung, in welcher die zumindest eine erste Filterschicht gehaltert ist, wobei die Halterung zur Befestigung in dem Kraftfahrzeug vorgesehen ist.

Im Stand der Technik sind Filtervorrichtung für Kraftfahrzeuge vorgesehen, die jedoch im Allgemeinen dazu eingerichtet sind, grobe Körner oder Ähnliches aus der Luft zu filtern, welche aus dem Außenbereich des Kraftfahrzeuges in den Kraftfahrzeuginnenraum eingespeist wird.

Allerdings haben diese Filtervorrichtungen unter anderem den Nachteil, dass kleinere Partikel, die beispielsweise Allergiker Probleme bereiten, nicht gefiltert bzw. rückgehalten werden.

Die EP 2 731 697 A2, die EP 2 361144 A2 und die EP 1 953 286 A1 zeigen Filtervorrichtungen und Verfahren zum Beschichten eines Trägermediums aus dem Stand der Technik.

Der vorliegenden Erfindung liegt die Aufgabe zugrunde, eine verbesserte Filtervorrichtung der eingangs genannten Art bereitzustellen, welche auch für Allergiker sehr gut verträglich ist.

Diese Aufgabe wird gemäß dem Kennzeichen von Anspruch 1 gelöst.

In bisher noch nicht veröffentlichten Voruntersuchungen konnte von den Erfindern überraschenderweise festgestellt werden, dass mit einer Salzschicht beschichtete Filterschichten im Vergleich zu herkömmlichen Filterschichten eine deutlich verbesserte Filterwirkung für gasförmige Verbrennungsprodukte aufweisen. Mittels der untersuchten mit Salzschichten beschichteten Filtermedien konnte in Tierversuchen bei Exposition der Versuchstiere mit toxischen Verbrennungsgasen die Letalität der Versuchstiere signifikant reduziert werden.

Zusätzlich zu den in der Luft enthaltenen mechanischen Verunreinigungen entfernt der Filter Abgase, Ruß und Tabakrauch aus der einströmenden Luft, wodurch die Luft im Fahrzeuginnenraum frisch und angenehm zum Atmen wird.

Der Filter kann Partikel bis zu einer Größe von 0,1 µm herausfiltern. Dabei handelt es sich nicht nur um Staub, sondern auch um Blütenpollen, was besonders für Allergiker geeignet ist.

Erfindungsgemäß ist vorgesehen, dass die Filtervorrichtung zumindest eine zweite Filterschicht aus einem Trägermedium umfasst, welches aus einem Kunststoff, beispielsweise Filterpapier, oder aus einem synthetischen Vlies gebildet ist.

Die zumindest eine zweite Filterschicht ist ohne einer Salzbeschichtung und ist vorgesehen für einen Rückhalt von größeren Partikeln. Der Einsatz der zumindest einen zweiten Filterschicht ermöglicht eine verbesserte Filterfähigkeit der zumindest einen ersten Filterschicht, da die nutzbare Filterfläche von letzterer nicht durch die größeren Partikel, wie Steine, Körner oder Ähnliches belegt wird und dadurch die Filterfähigkeit eingeschränkt wird.

Erfindungsgemäß ist vorgesehen, dass die Salzschicht auf dem Trägermedium der zumindest einen ersten Filterschicht ein Dicke von 0,1 bis 100 µm, vorzugsweise 1 bis 5 µm, aufweist.

In Vorversuchen hat sich gezeigt, dass bereits diese vergleichsweise dünnen Salzschichten eine vorteilhafte Wirkung auf das Absorptionsverhalten der beschichteten Filterschichten haben und das Rückhaltevermögen der Atemschutzmaske (nicht Erfindungsgemäß) gegen gesundheitsschädliche Stoffe in der Atemluft deutlich verbessert wird.

Besonders effektiv kann die Beschichtung des Trägermediums der zumindest einen ersten Filterschicht sein, wenn das Trägermedium mit einer Salzschicht mit einer Flächenbeladung von 10 g bis 300 g/m², vorzugsweise von 50 g bis 250 g/m², besonders bevorzugt von 100 g bis 200 g/m², beschichtet ist. Je gleichmäßiger die Salzschicht über die gesamte Fläche des Trägermediums verteilt ist bzw. je konstanter die Flächenbeladung der Salzschicht über die Fläche des Trägermediums ist, umso höher ist das Rückhaltevermögen der Filtervorrichtung gegen gesundheitsschädliche Stoffe.

Es kann vorgesehen sein, dass das Filtermedium zumindest zwei, drei oder mehrere erste Filterschichten aufweist, wobei jedes Trägermedium der zwei oder mehreren Filterschichten zumindest abschnittsweise mit einer Salzschicht beschichtet ist. Vorzugsweise sind die zwei oder mehreren Filterschichten zumindest abschnittsweise miteinander verbunden. Beispielsweise können die Filterschichten miteinander vernäht oder verklebt sein, um solcherart ein gegenseitiges Verschieben der einzelnen Filterschichten zu vermeiden.

Erfindungsgemäß ist vorgesehen, dass das anorganische Salz, welches die Salzschicht bildet, ein Natriumsalz enthält.

Es kann vorgesehen sein, dass die Salzschicht zumindest ein weiteres Salz umfasst, das ausgewählt ist aus der Gruppe bestehend aus: Kaliumsalz, Calciumsalz, Magnesiumsalz, Mangansalz.

Im Rahmen der Erfindung können neben Kochsalz auch noch andere Salze oder Salzmischungen eingesetzt werden. Beispielsweise kann auch Meersalz zum Beschichten der Salzschichten auf den Filtermaterialien verwendet werden. Die Salzblume von Meersalz besteht beispielhaft im Mittel aus über 97 % Natriumchlorid, 0,5 % Calciumsulfat, 0,3 % Magnesiumchlorid, 0,2 % Magnesiumsulfat ("Bittersalz") und etwa 0,1 % Kaliumchlorid, der Rest ist verbliebenes Wasser.

Es kann vorgesehen sein, dass die Halterung aus Kunststoff gebildet ist.

Es kann vorgesehen sein, dass die Filtervorrichtung genau eine erste Filterschicht umfasst, deren Trägermedium aus Papier oder aus einem nicht gewebten synthetischen Material gebildet ist.

Es kann vorgesehen sein, dass das Trägermedium der zumindest einen ersten Filterschicht vollständig an dessen Oberflächen mit einer Salzschicht beschichtet ist.

Die erfindungsgemäße Filtervorrichtung kann durch ein Verfahren (nicht Erfindungsgemäß) zum Beschichten eines Trägermediums einer ersten Filterschicht mit einer Salzschicht hergestellt werden, wobei die folgenden Schritte durchgeführt werden:
- Bereitstellen einer wässrigen anorganischen Salzlösung enthaltend ein Natriumsalz;
- Gleichmäßiges Aufbringen der wässrigen anorganischen Salzlösung auf dem Trägermedium der ersten Filterschicht;
- Trocknen des Trägermediums unter Bildung einer Salzschicht in kristalliner Form an der Oberfläche des Trägermediums.

Im Falle einer mehrfachen Imprägnierung kann die erste Expositionszeit des Trägermediums in der Salzlösung beispielsweise von 1 bis 3 Minuten betragen, wobei die erste Expositionszeit für das jeweils verwendete Trägermedium möglichst adaptiert ist. Beispielsweise kann es für den Einsatz von Gaze (Mull) als Filtermaterial ausreichen, wenn das Filtermaterial eine Minute lang in der Salzlösung imprägniert wird. Für andere Textilstoffe kann es hingegen erforderlich sein, dass deren Expositionszeit für eine sichere, gleichmäßige und vollständige Imprägnierung des Textilgewebes mit der Salzlösung beispielsweise auf 3 Minuten erhöht wird. Mit einem gewissen Zeitabstand, beispielsweise von 1 Stunde bis 14 Stunden, kann erforderlichenfalls die Salzschichtenimprägnierung in gleicher Weise mehrere Male, beispielsweise 2 bis 7 Mal wiederholt werden. Jede Wiederholung der Imprägnierungssitzungen kann dabei mit derselben oder aber mit einer erhöhten, verlängerten Expositionszeit erfolgen. Ebenso ist es vorgesehen, dass die Expositionszeiten mit der steigenden Anzahl an Wiederholungen der Imprägnierung ebenfalls ansteigen. Dabei kann vorgesehen sein, dass als Salzlösung eine Kochsalzlösung mit einer Salzkonzentration von 0,9% bis 35,9% verwendet wird.

Dadurch wird die Rückhaltung von kleinen und mittleren Partikel, feinen Partikel sowie Gase und chemischen Elementen erhöht.

Beispielsweise können eine isotonische Kochsalzlösung oder eine zum Blutplasma isoosmotische Lösung aus Kochsalz (Natriumchlorid) in injektionsgeeignetem Wasser zur Beschichtung des Trägermediums verwendet werden.

Es kann vorgesehen sein, dass die Salzschicht mittels Imprägnierung der Salzschicht mit der Salzlösung aufgebracht wird, wobei das Trägermedium zumindest einmal, vorzugsweise mehrmals, in die Salzlösung eingetaucht wird.

Es kann vorgesehen sein, dass die Salzschicht mittels Aufsprühen der Salzlösung auf das Trägermedium aufgebracht wird.

Nachfolgend wird die Erfindung anhand von beispielhaften Zeichnungen näher erläutert. Hierbei zeigt
Fig. 1 zeigt eine beispielhafte Filtervorrichtung in einer perspektivischen Ansicht und zumindest einer ersten Filterschicht,
Fig. 2A eine beispielhafte Anordnung von ersten und zweiten Filterschichten, welche mit einem Klebemittel miteinander verbunden sind,
Fig. 2B eine beispielhafte erste Filterschicht, und
Fig. 3 einen beispielhaften Lüftungskanal eines Kraftfahrzeuges.

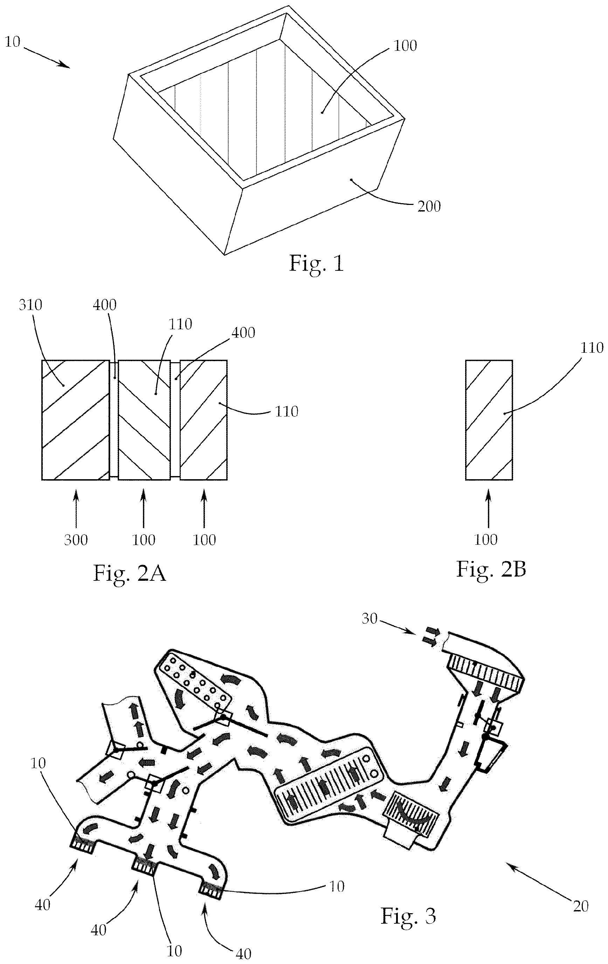

**Fig. 1** zeigt eine beispielhafte Filtervorrichtung **10** für ein Kraftfahrzeug zur Filterung einer von außen in den Kraftfahrzeuginnenraum eingespeisten Luft in einer perspektivischen Ansicht, wobei die Filtervorrichtung **10** zumindest eine erste Filterschicht **100** aus einem Trägermedium **110** zur Aufnahme einer Beschichtung umfasst, wobei in **Fig. 1** nur eine Seite einer ersten Filterschicht **100** zu sehen ist.

Ferner umfasst die Filtervorrichtung **10** eine Halterung **200,** in welcher die zumindest eine erste Filterschicht **100** gehaltert ist, wobei die Halterung **200** zur Befestigung in dem Kraftfahrzeug vorgesehen ist und aus Kunststoff gebildet ist.

**Fig. 2A** zeigt ein Beispiel einer möglichen Anordnung von Schichten **100, 300,** wobei in dem gezeigten Beispiel zwei erste Filterschichten **100** und eine zweite Filterschicht **300** zu sehen sind, wobei zwischen den Schichten **100, 300** ein Klebemittel **400** zum Verbinden der jeweiligen Schichten **100, 300** angeordnet ist.

Das Trägermedium **110** der ersten Filterschichten **100** ist abschnittsweise oder vollständig an deren Oberflächen mit einer Salzschicht beschichtet, wobei die Salzschicht aus zumindest einem anorganischen Salz, beispielsweise ein Natriumsalz, gebildet ist. Die Salzschicht kann auch ein weiteres Salz umfassen, das ausgewählt ist aus der Gruppe bestehend aus: Kaliumsalz, Calciumsalz, Magnesiumsalz, Mangansalz.

Die Dicke der Salzschicht auf den Trägermedien **110** der ersten Filterschichten **100** weist eine Dicke von 0,1 bis 100 µm, vorzugsweise 1 bis 5 µm, auf.

Die zweite Filterschicht **300** besteht ebenfalls aus einem Trägermedium **310,** welches aus einem Kunststoff oder aus einem synthetischen Vlies gebildet ist, wobei das Trägermedium **310** der zweiten Filterschicht **300** keine Salzschicht aufweist.

**Fig. 2B** zeigt eine Ausführungsform, (nicht Erfindungsgemäß), in welcher nur eine einzige erste Filterschicht **100** umfasst ist, wobei in der Figur ein Querschnitt der einen ersten Filterschicht **100** zu sehen ist. Hierbei kann das Trägermedium **110** aus Papier oder aus einem nicht gewebten synthetischen Material gebildet sein.

**Fig. 3** zeigt einen beispielhaften, schematisch dargestellten Lüftungskanal **20** eines Kraftfahrzeuges, wobei der Lüftungskanal **20** einen Lüftungseinlass **30** und in dem gezeigten Beispiel drei Lüftungsauslässe **40** aufweist. Hierbei wird Luft von außerhalb des Kraftfahrzeuges in den Lüftungseinlass eingespeist und wird durch den Lüftungskanal **20** zu den jeweiligen Lüftungsauslässen **40** gelenkt, wobei jeweils eine beispielhafte Filtervorrichtung **10** im Bereich der Lüftungsauslässe **40** angeordnet ist.

**LISTE DER BEZUGSZEICHEN**

| | |
|---|---|
| Filtervorrichtung | 10 |
| Lüftungskanal | 20 |
| Lüftungseinlass | 30 |
| Lüftungsauslass | 40 |
| Erste Filterschicht | 100 |
| Trägermedium 1. Filterschicht | 110 |
| Halterung | 200 |
| Zweite Filterschicht | 300 |
| Trägermedium 2. Filterschicht | 310 |
| Klebemittel | 400 |

## Patentansprüche

1. Klimaanlage für ein Kraftfahrzeug mit zumindest einer Filtervorrichtung zur Filterung einer von außen in den Kraftfahrzeuginnenraum eingespeisten Luft, wobei die Filtervorrichtung (10) umfasst:
- zumindest eine erste Filterschicht (100) aus einem Trägermedium (110) zur Aufnahme einer Beschichtung,
- eine Halterung (200), in welcher die zumindest eine erste Filterschicht (100) gehaltert ist, wobei die Halterung (200) zur Befestigung in dem Kraftfahrzeug vorgesehen ist,
das Trägermedium (110) der zumindest einen ersten Filterschicht (100) zumindest abschnittsweise an dessen Oberflächen mit einer Salzschicht beschichtet ist, wobei die Salzschicht aus zumindest einem anorganischen Salz gebildet ist, wobei die Salzschicht Kochsalz als zumindest ein anorganisches Salz enthält, wobei die Salzschicht auf dem Trägermedium (110) der zumindest einen ersten Filterschicht (100) eine Dicke von 0,1 bis 100 µm, vorzugsweise 1 bis 5 µm, aufweist,
**dadurch gekennzeichnet, dass**
die Filtervorrichtung (10) zumindest eine zweite Filterschicht (300) aus einem Trägermedium (310) umfasst, welches aus einem Kunststoff, beispielsweise Filterpapier, oder aus einem synthetischen Vlies gebildet ist, wobei die zweite Filterschicht ohne einer Salzbeschichtung ist, und wobei die zweite Filterschicht für einen Rückhalt von größeren Partikeln vorgesehen ist, so dass die nutzbare Filterfläche von der ersten Filterschicht nicht durch die größeren Partikel belegt wird.

2. Klimaanlage nach Anspruch 1, **dadurch gekennzeichnet, dass** die Filtervorrichtung (10) zumindest zwei, drei oder mehrere erste Filterschichten (100) aufweist.

3. Klimaanlage einem der Ansprüche 1 bis 2, **dadurch gekennzeichnet, dass** die Salzschicht zumindest ein weiteres Salz umfasst, das ausgewählt ist aus der Gruppe bestehend aus: Kaliumsalz, Calciumsalz, Magnesiumsalz, Mangansalz.

4. Klimaanlage nach einem der Ansprüche 1 bis 4, 3, **dadurch gekennzeichnet, dass** die Halterung (200) aus Kunststoff gebildet ist.

5. Klimaanlage nach einem der Ansprüche 1 bis 4, **dadurch gekennzeichnet, dass** die Filtervorrichtung (10) genau eine erste Filterschicht (100) umfasst, deren Trägermedium (110) aus Papier oder aus einem nicht gewebten synthetischen Material gebildet ist.

6. Klimaanlage nach einem der Ansprüche 1 bis 5, **dadurch gekennzeichnet, dass** das Trägermedium (110) der zumindest einen ersten Filterschicht (100) vollständig an dessen Oberflächen mit einer Salzschicht beschichtet ist.

## Claims

1. Air conditioning system for a motor vehicle with at least one filter device for filtering air fed from outside into the motor vehicle interior, the filter device (10) comprising:
- at least one first filter layer (100) made of a carrier medium (110) for receiving a coating,
- a holder (200) in which the at least one first filter layer (100) is held, the holder (200) being provided for fastening in the motor vehicle,
the carrier medium (110) of the at least one first filter layer (100) is coated at least in sections on its surfaces with a salt layer, the salt layer being formed from at least one inorganic salt, the salt layer containing common salt as at least one inorganic salt, the salt layer on the carrier medium (110) of the at least one first filter layer (100) having a thickness of 0.1 to 100 µm, preferably 1 to 5 µm,
**characterized in that**
the filter device (10) comprises at least one second filter layer (300) of a carrier medium (310) formed of a plastic, for example filter paper, or of a synthetic nonwoven, wherein the second filter layer is without a salt coating, and wherein the second filter layer is provided for a retention of larger particles, so that the usable filter area of the first filter layer is not occupied by the larger particles.

2. Air conditioning system according to claim 1, **characterized in that** the filter device (10) comprises at least two, three or more first filter layers (100).

3. Air conditioning system according to any one of claims 1 to 2, **characterized in that** the salt layer comprises at least one further salt selected from the group consisting of: Potassium salt, Calcium salt, Magnesium salt, Manganese salt.

4. Air conditioning system according to any one of claims 1 to 3, **characterized in that** the support (200) is formed of plastic.

5. Air conditioning system according to any one of claims 1 to 4, **characterized in that** the filter device (10) comprises precisely a first filter layer (100), the support medium (110) of which is formed of paper or of a non-woven synthetic material.

6. Air conditioning system according to any one of claims 1 to 5, **characterized in that** the carrier medium (110) of the at least one first filter layer (100) is completely coated on its surfaces with a salt layer.

## Revendications

1. Climatiseur pour un véhicule automobile avec au moins un dispositif de filtrage pour filtrer un air introduit de l'extérieur dans l'habitacle du véhicule automobile, le dispositif de filtrage (10) comprenant :
- au moins une première couche filtrante (100) constituée d'un milieu porteur (110) pour recevoir un revêtement,
- un support (200) dans lequel est maintenue la au moins une première couche filtrante (100), le support (200) étant prévu pour être fixé dans le véhicule automobile,
le milieu de support (110) de la au moins une première couche de filtre (100) est revêtu au moins par sections sur ses surfaces d'une couche de sel, la couche de sel étant formée d'au moins un sel inorganique, la couche de sel contenant du sel de cuisine comme au moins un sel inorganique, la couche de sel sur le milieu de support (110) de la au moins une première couche de filtre (100) ayant une épaisseur de 0,1 à 100 µm, de préférence de 1 à 5 µm,
**caractérisé en ce que**
le dispositif de filtration (10) comprend au moins une deuxième couche de filtration (300) constituée d'un milieu de support (310) formé d'une matière plastique, par exemple un papier filtre, ou d'un non-tissé synthétique, la deuxième couche de filtration étant dépourvue d'un revêtement de sel, et la deuxième couche de filtration étant prévue pour retenir les particules plus grosses, de sorte que la surface de filtration utile de la première couche de filtration n'est pas occupée par les particules plus grosses.

2. Climatiseur selon la revendication 1, **caractérisé en ce que** le dispositif de filtration (10) comprend au moins deux, trois ou plusieurs premières couches de filtration (100).

3. Climatiseur selon l'une des revendications 1 à 2, **caractérisé en ce que** la couche de sel comprend au moins un autre sel choisi dans le groupe constitué par : Sel de potassium, sel de calcium, sel de magnésium, sel de manganèse.

4. Climatiseur selon l'une des revendications 1 à 3, **caractérisé en ce que** le support (200) est formé en matière plastique.

5. Climatiseur selon l'une des revendications 1 à 4, **caractérisé en ce que** le dispositif de filtration (10) comprend précisément une première couche de filtration (100) dont le support (110) est formé de papier ou d'un matériau synthétique non tissé.

6. Climatiseur selon l'une quelconque des revendications 1 à 5, **caractérisé en ce que** le milieu support (110) de ladite au moins une première couche filtrante (100) est entièrement revêtu d'une couche de sel sur ses surfaces.
